Europäisches Patentamt

European Patent Office

Office européen des brevets

(19)

(11) EP 0 714 211 A2

(12) EUROPEAN PATENT APPLICATION

(43) Date of publication:
29.05.1996 Bulletin 1996/22

(51) Int. Cl.$^6$: H04N 7/36

(21) Application number: 95118022.3

(22) Date of filing: 16.11.1995

(84) Designated Contracting States:
AT BE CH DE DK ES FR GB GR IE IT LI LU MC NL PT SE

(30) Priority: 21.11.1994 DE 4441295

(71) Applicant: SICAN, GESELLSCHAFT FÜR SILIZIUM-ANWENDUNGEN UND CAD/CAT NIEDERSACHSEN mbH D-30419 Hannover (DE)

(72) Inventors:
• Komarek, Thomas, Dr. D-52134 Herzogenrath (DE)
• Krönke, Christian D-30851 Langenhagen (DE)
• Oberwestberg, Manfred D-30165 Hannover (DE)

(54) **Method and circuit for addressing components of blockwise organised digital picture data in a page addressed memory**

(57) The invention relates to a method and circuit for addressing luminance components and chrominance components or forward prediction components and backward prediction components of blockwise organised digital picture data in a page addressed memory. Known methods for addressing picture data require high times for memory access, especially causes by page breaks. The components of the picture data, i.e. chrominance and luminance values or forward and backward prediction components, are stored in address areas separated each other. Thus several pictures are block oriented stored in the memory. The blocks arranged in the different pictures at the same positions are identified using the same block address, so that the block address has to be calculated only one time. Using said method it is possible to divide a block address and a motion address into two components, one being proportional to the lines and one being proportional to the columns of a respective picture element.

Fig. 1

## Description

The invention relates to a method and circuit for addressing luminance components and chrominance components or forward prediction components and backward prediction components of blockwise organised digital picture data in a page addressed memory. Picture data are stored into a memory that way, the time required for memory access is reduced. The circuit is structured serial and designed for implementing a small number of operators.

### Technical field

Modern methods of video signal compression bases on processing the prediction error of a motion compensated differential pulse code modulation (DPCM) using a two-dimensional discrete cosinus transformation (DCT) and quantiziation of the DCT-coefficients. The picture is regular segmented into blocks.

The decoding process reverses the effect of this procedures. After processing invers quantiziation and invers DCT a block of prediction errors results. Like the DPCM, this block is added to a block of prediction errors in the encoder.

The compression factor increases to a relative high level, if the sampled data of the video signal are predicted having an error as low as possible while processing the DPCM. This so called prediction is processed at each data block of the data of a block already being coded. The prediction data of the components are stored into a read and write memory as decoded data. Due to the motion runs in the series of pictures the block being the best fit for a prediction in respect to the position of the block in the picture to be predicted can be displaced. This displacements are described by a displacement vector estimated in the encoder. Said displacement vector is also suited for a so called motion compensated prediction in the encoder as well as in the decoder. In both of them the prediction errors are added to the prediction values for receiving the decoded data.

The memory addresses are generated in an address generator. To design an address generator having a circuit expenditure being as low as possible an efficient structured address code is necessary. Using the address code blocks have to be read out at positions determined by the displacement vectors. In the case displacement vectors pointing to areas outside the picture, non usable values of prediction occur. Said so called non conforming displacement vectors have to be ignored. For different kinds of use the address code should be suited for different formats of the pictures. The disclosed structure of the invention is suitable for the realisation of an address generator usable for a motion compensated prediction.

### State of the art

The prediction values to be read and written origin from different pictures. Their data have to be stored in memory areas addressable separate each other. Said memory areas may include the whole data of a picture.

As memory means standard modules are of interest for a realisation having a reasonable price. Memory means divided in pages are suited for fast memory access to big quantities of data. For example, as stated in 1994 DRAM Data Book, MICRON Semiconductor Inc., Boise, Idaho, the access to a first date in a page last two or three times as the time necessary for accessing onto singular data in-between a page. Only when the signal processing is adapted to the times necessary for a memory access in-between a page the whole system will be sufficiently efficient. If a so called page break occurs said signal processing procedures have to wait for the following data a longer time as while reading in-between a page.

In the german patent DE 44 08 522 a method for storing picture data using a page addressed memory having some block addresses for parts of a picture belonging together. But luminance and chrominance data are stored into one memory unit using different address areas. The disclosed method doesn't solve the problem of wait states during page breaks as described in this paper.

The object of the invention is to provide a method and a circuit for addressing components of blockwise organised digital picture data in a page addressed memory. There should be provided an implementation comprising a number of operators being as small as possible and having a low number of steps for operation.

### Invention

The object of the invention is achieved by the method of the invention claimed in claim 1 and by the corresponding circuit as claimed in claim 8.

The components of the picture data, i.e. chrominance and luminance values or forward and backward prediction components, are stored in address areas separated each other. Thus several pictures are block oriented stored in the memory. The blocks arranged in the different pictures at the same positions are identified using the same block address, so that the block address has to be calculated only one time.

Using said method it is possible to divide a block address and a motion address into two components, one being proportional to the lines and one being proportional to the columns of a respective picture element. This way advantageously said two components can be calculated simultaneous. Moreover this way it is easily possible proving the conformity of the motion addresses using the limits of pictures in direction of lines and columns.

The address for each picture results from summarising the corresponding initial value. The block address allows a statement concerning the position of those pixels of a picture their sample values being read. That is why non conforming displacement vectors can be detected using the disclosed code and non usable values of prediction are avoided.

The whole elements of a block line are stored in one page. Advantageously no delay in time occur in a page break while reading and writing the picture data.

The circuit of the invention is designed sequentially, so that components can be calculated simultaneous.

Two adder are serving for summing the two components being proportional to the lines and columns of said block address and said motion address respectively. Except one multiplier adder can be used for the multiplications. The multiplications are processed step by step. Thereby the effort for implementing can be decreased a lot, because circuits for multiplication have to be build up very costly.

Two further adder, e.g. designed as half adder, are used for adding or subtracting the two components of said motion address and a relational value.

The method and the circuit are structured a way, that the results of each of the operations can be used several times. Thus only a few operations have to be processed for the different pictures. The address code may be parametric, so that the same generator can be used even if different formats of pictures occur.

## Drawings

The invention is illustrated using the following figures. It shows:

Fig. 1: Structure of the address code for a motion compensated and non motion compensated block address;

Fig. 2: Example for a picture having $M = 4$ lines of blocks each having $N = 8$ blocks;

Fig. 3: Arrangement of the blocks of two pictures as shown in Fig. 2 in a memory means (areas underlayed grey) having read and write access predicting motion compensated onto two blocks drawn as areas underlayed dark grey.

## Detailed description

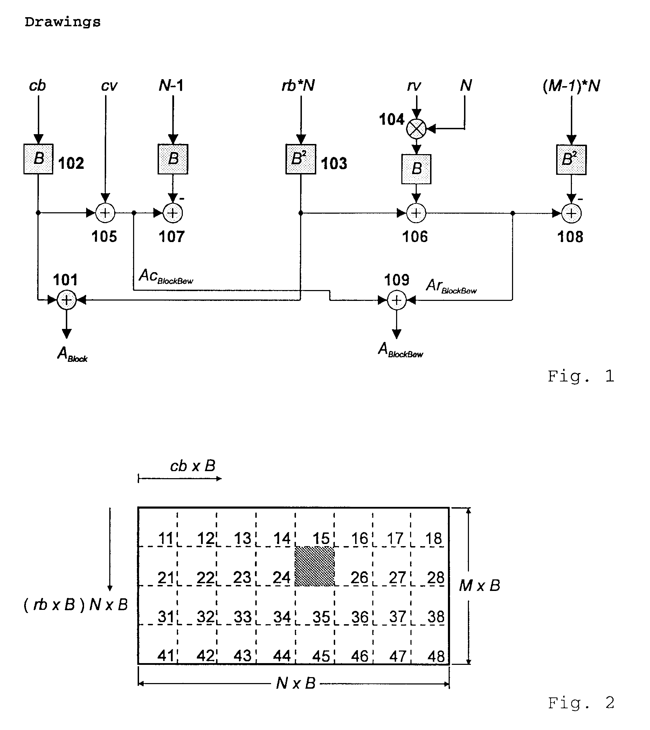

The block address depends on the positions of the blocks in a picture. Using the current coding procedures for compressing video signals it can be supposed that the length of a line $L$ of a picture is a multiple of being even numbered $N$ of the edge length $B$ of a square block (see Fig. 2):

$$L = N \cdot B \tag{1}$$

Because of the DCT the block size $B$ corresponds to the multiple of a 2th power. If the number of lines $Z$ is a multiple of $M$ of $B$ being even numbered, analogue to that the equation

$$Z = M \cdot B \tag{2}$$

is valid.

Having a continuous used address area the addresses of data being arranged successive in one line differ in one and differ in the order of the lines being arranged as drawn in equation 1 at $N \cdot B$. The calculation of addresses bases on these differences.

Fig. 1 is an example of the code structure reasonable for the production of the block address. The block address of each block using $B^2$ data results in

$$A_{Block} = rb \cdot N \cdot B^2 + cb \cdot B \tag{3}$$

Thereby $N$ blocks in one of the $M$ lines are numbered using $cb$ ($0 \leq cb \leq N\text{-}1$) and each of these lines is numbered using $rb$ ($0 \leq rb \leq M\text{-}1$). In the circuit of the invention for generating addresses the block address is added using two components (101). The summands are calculated successive adding $N$ and 1 respectively and shifting at $B$ (102) and $B^2$ (103) respectively afterwards.

In a memory access for reading having motion compensated picture data the displacement described by the displacement vector ($rv, cv$) is added to the block address (105, 106, 109):

$$\begin{aligned} A_{BlockBew} &= A_{Block} + rv \cdot N \cdot B + cv \\ &= rb \cdot N \cdot B^2 + cb \cdot B + rv \cdot N \cdot B + cv \end{aligned} \tag{4}$$

A real multiplication can't be avoided in the realisation of the address generator for calculating $rv \cdot N$ (104).

Displacement vectors being non conforming are displacing the block to be read at least outside one of the four frames of a picture. These vectors are recognised at the time at least one of the four following inequations is meet:

$$rb \cdot N \cdot B^2 + rv \cdot N \cdot B < 0 \tag{5}$$

$$rb \cdot N \cdot B^2 + rv \cdot N \cdot B > (M\text{-}1) \cdot N \cdot B^2 \tag{6}$$

$$cb \cdot B + cv < 0 \tag{7}$$

$$cb \cdot B + cv > (N\text{-}1) \cdot B \tag{8}$$

The sums at the left sides of the four inequations (5) to (8) are summands of equation (4). Because the detection of displacement vectors being non conforming is processed only component by component the address as drawn in equation (4) can be separately determined using two components as well (105, 106):

$$Ar_{BlockBew} = rb \cdot N \cdot B^2 + rv \cdot N \cdot B$$

$$Ac_{BlockBew} = cb \cdot B + cv \tag{9}$$

If one of the two sums drawn in equation (9) is negative corresponding to the inequations (5) and (7), a displacement vector being non conforming is recognized. In a description of the sums using complements of the 2th, the sign bits both of the sums in equation (9) equals one. The inequations (6) and (8) still missing are calculated using two additional subtractions (107, 108). If in this case one of the two results is negative, there is a displacement vector being non conforming. Then the components of the displacement vector have to be ignored while calculating equation (9). The differences of these subtractions (107, 108) aren't used, so that a circuit having the functionality of a half adder is sufficient.

The further process depends on the whole data of a block completely being read and written or the data of different blocks separately being read and written by turns. In the first case it is practical adding the addresses for initialisation each block to the results of equation (4) and the sum of equation (9) respectively. Afterwards the data are addresses in-between a block. However in the second case first the single data are addressed in-between a block and then added to the addresses for initialisation for the different blocks.

Addressing the single data in-between the blocks is processed similar to the block addressing of the blocks. The data of a line of a block are numbered using $cd$ ($0 \leq cd \leq B\text{-}1$) and each of these lines is numbered using $rd$ ($0 \leq rd \leq B\text{-}1$). Then the address of the data in-between the blocks amount to

$$A_{Datum} = rd \cdot N \cdot B + cd \tag{10}$$

As well as in equation (3) the data address can be achieved successive adding $N$ and 1.

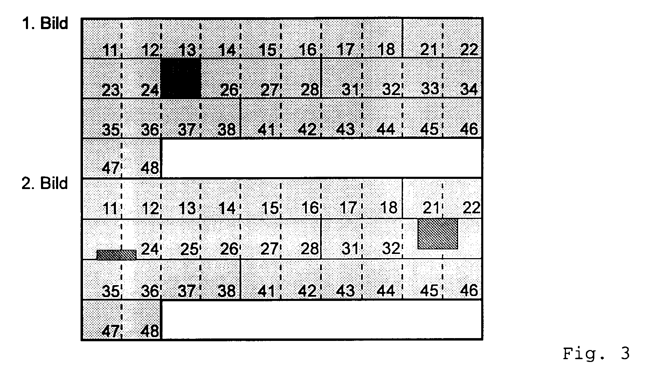

The values for initialisation the different address areas can be chosen the way, that the memory is completely occupied without any gap. Especially while alternating sizes of the pictures and blocks occurs the values for initialisation have to be changed. To decrease the effort for registers it can taken advantage of the fact, that the block size $B$ equals a multiple of a 2th power in methods for video signal compression using a DCT. Then the values for initialisation are a multiple of $B^2$ and consequently the registers are smaller. Further it is practical placing the first address of a block or even of the first block into an address area at the beginning of a page (see Fig. 3). The number of data stored in a page equals the multiple of a 2th power. Then the data in a line of a block fit in the same page altogether. Accessing the data line by line, short times for access are possible. Additional page breaks contributing to a increasing of access times occurs only in motion compensated prediction, in which the number of page breaks depends on the block size $B$ and the length of a page. A page break can be detected by a change of the upper address bits.

The address code is such flexible, that any formats of pictures having different relations between height and side can be processed saving a clear relationship between the address and the position of pixels in the picture. Different formats of pictures are addressable in a block line using said parameter block size $B$, number $M$ of the block lines and number $N$ of the blocks.

To minimise the costs for implementation the multiplications can be replaced adding successive using the disclosed code. The only multiplication being unavoidable is those in 104 of equation (4). The other multiplications with the parameter $N$ and $M$, e.g. those in equation (8), are only necessary storing picture formats being variable changeable. In fixed picture formats the last named multiplications are completely dropped.

The address code is suited for a reading access with and without motion compensation. In this case the same block address is determined for the whole address areas only once. Non conforming displacement vectors can be ignored and defective prediction can be avoided using said operation for comparing this block address and the parameters block size, number of block lines and number of blocks.

Example for implementation

Block oriented coding is provided by the technical committee of ISO and IEC for the so called MPEG standard. Corresponding to "Information Technology - Coding of Moving Pictures and associated Audio for Digital Storage media up to about 1.5 Mbit/s", Part 2: Video, Draft International Standard ISO/IEC DIS 11172-1 1993, a picture is structured into macro-blocks. The sample values of the video signal are representing the digital luminance signal as well as the chrominance signals corresponding to the recommendation CCIR Rec. 601-2, "Encoding Parameters of Digital Television for Studios", of the Study Group 25G/11 dated 1990. All the three components are separately coded and decoded using the same procedure. This procedure is supported by the same displacement vectors. A macroblock consists of four 8x8 blocks for the luminance data and two 8x8 blocks for the data of the two chrominance signals.

Using the address code the parameter of the MPEG standard $B$ has to be 16. As an example two variations of address generating are described in the following. In the first variant the data blocks of the luminance signal and the two chrominance signals of each picture are arranged in three separate address areas. In the second variant the data blocks of the chrominance signals are arranged in a block alternating line by line. Thus the second variant only has two address areas per picture. Non conforming displacement vectors are detected corresponding to the four inequations (8).

In both of the two variants the four luminance blocks are summarised into a square macro-block having two lines in two blocks each. These four blocks are described as $rbl$ and $cbl$ respectively. Together with the block size $B' = 8$ analogue to equation (3)

$$AL_{Block} = rbl \cdot 2 \cdot B' + cbl$$
$$= rbl \cdot B + cbl \tag{11}$$

has to be added to the address of the corresponding macro-block as described in equation (3) and (4) for the first address of a block of luminance data in-between a macro-block.

In the first variant the data for addressing luminance signals and chrominance signals bases on the same positions $cb$ and $cr$ of the blocks in a picture. Each block of one of the two chrominance signals consists of 8x8 data, because the relation of the data of the single components of said chrominance signals to said luminance signals is 1/4. This way the motion addresses results to:

$$ArC_{BlockBew} = rb \cdot N \cdot B'^2 + \frac{rv}{2} \cdot N \cdot B'$$
$$= \frac{1}{4} \cdot (rb \cdot N \cdot B^2 + rv \cdot N \cdot B) \tag{12}$$
$$= \frac{1}{4} \cdot Ar_{BlockBew}$$

$$AcC_{BlockBew} = cb \cdot B' + \frac{cv}{2}$$
$$= \frac{1}{2} \cdot (cb \cdot B + cv) \tag{13}$$
$$= \frac{1}{2} \cdot Ar_{BlockBew}$$

using the equation (9) and having $B = 2 \cdot B'$.

It has to be noted that, due to the ratio of 1/4, the lengths of the displacement vector ($rv, cv$) has to be shortened about the half length as well.

The sums in said equations (12) and (13) results from the shifted summands of the equations (9). The block addresses of the data of the chrominance signals can be calculated using the same circuit as for the luminance data. The single data in the blocks are addressed corresponding to equation (10).

In said second variant the addressing of the luminance data is identical to the first variant. However in this case the two data blocks of the chrominance signals $chrom1$ and $chrom2$ are summarised in one address area alternating line by line. The address area used for the two chrominance signals comprises 8 data each, the data arranged in two times 8 lines. Therefore the vertical step width between the lines of the same type is twice as big, as those for the luminance data. At $B = 2 \cdot B' = 16$ the block addresses for the data of the two chrominance signals results in

$$A_{Block}(chom1) = 2 \cdot rb \cdot N \cdot B'^2 + cb \cdot B'$$
$$= \frac{1}{2} \cdot (rb \cdot N \cdot B^2 + cb \cdot B) \tag{14}$$

$$A_{Block}(chrom2) = 2 \cdot rb \cdot N \cdot B'^2 + N \cdot B' + cb \cdot B'$$
$$= \frac{1}{2} \cdot (rb \cdot N \cdot B^2 + N \cdot B + cb \cdot B) \tag{15}$$

The additional summand $N \cdot B'$ of equation (15) is based on the differences between the addresses of the data of pixels arranged one below the other as calculated in equation (1).

The displacement vector ($rv,cv$) to be taken into consideration due to the motion compensation is related to the corresponding block address in dependence on the address area to be chosen. Thereby the block address of the luminance data is composed a way corresponding to equation (4).

The assembling of the data of the chrominance signals alternating line by line is already included in the calculation of the block address, so that for the block address of said two chrominance signals additionally the same summands results:

$$A_{BlockBew}(chrom1) = A_{Block}(chrom1) + 2 \cdot \frac{rv}{2} \cdot N \cdot B' + \frac{cv}{2}$$
$$= A_{Block}(chrom1) + \frac{1}{2} \cdot (rv \cdot N \cdot B + cv) \tag{16}$$
$$= \frac{1}{2} \cdot (Ar_{BlockBew} + Ac_{BlockBew})$$

$$A_{BlockBew}(chrom1) = A_{Block}(chrom2) + 2 \cdot \frac{rv}{2} \cdot N \cdot B' + \frac{cv}{2}$$
$$= A_{Block}(chrom2) + \frac{1}{2} \cdot (rv \cdot N \cdot B + cv) \tag{17}$$
$$= \frac{1}{2} \cdot (Ar_{BlockBew} + Ac_{BlockBew}) + \frac{1}{2} \cdot N \cdot B$$

In this case, as well as in the first variant, the displacement vectors ($rv,cv$) have to be shortened about the half length.

The single luminance data and the data of the chrominance signals in-between one block are addressed corresponding to equation (10):

$$A_{Datum}(chrom) = 2 \cdot rd \cdot N \cdot B' + cd$$
$$= rd \cdot N \cdot B + cd \tag{18}$$

## Claims

1. Method for addressing luminance components and chrominance components or forward prediction components and backward prediction components of blockwise organised digital picture data in a page addressed memory, storing the components in separate address areas, each block having an address comprising a block address ($A_{Block}$) and a motion address ($A_{BlockBew}$), for each of one block said respective components having the same block address $A_{Block}$, and said motion address ($A_{BlockBew}$) being proportional to the positions determined by the displacement vectors.

2. Method as claimed in claim 1, dividing each of said block address ($A_{Block}$) and said motion address ($A_{BlockBew}$) into two parts of address ($Ar_{BlockBew}$; $Ac_{BlockBew}$), one being proportional to the lines and one being proportional to the columns of a respective picture element.

3. Method as claimed in claim 2, wherein each of the data of one line of a block is stored in one page of said memory.

4. Method as claimed in one of the proceeding claims, with the first address of an address area arranged at the beginning of a respective page of said memory.

5. Method for addressing motion compensated luminance components and chrominance components or forward prediction components and backward prediction components of blockwise organised digital picture data in a page addressed memory, storing the components in separate address areas, each block having an address comprising a block address ($A_{Block}$) and a motion address ($A_{BlockBew}$), for each of one block said respective components having the same block address ($A_{Block}$), and said motion address ($A_{BlockBew}$) being proportional to the positions determined by the displacement vectors, said block address ($A_{Block}$) of the motion compensated part of the picture calculated summarizing said block address ($A_{Block}$) and said motion address ($A_{BlockBew}$) being proportional to the motion vector.

6. Method as claimed in claim 5, wherein said part of address (e.g. $rb \cdot N \cdot B^2$) of said block address ($A_{Block}$), being proportional to the lines, is added to the respective part address (e.g. $rv \cdot N \cdot B$) of said motion address ($A_{BlockBew}$) and said part of address (e.g. $cb \cdot B$) of said block address ($A_{Block}$), being proportional to the columns, is added to the respective part address (cv) of said motion address ($A_{BlockBew}$), comparing the sums to reference values being proportional to the frames of a picture and calculating the motion address ($A_{BlockBew}$) of a respective block adding the sums afterwards.

7. Method as claimed in claim 6 for addressing pixels of pictures, wherein the room of the respective address is calculated as sum of said block address ($A_{Block}$) and a value proportional to the position of the pixel to be addressed in the block.

8. Circuit for addressing luminance components and chrominance components or forward prediction components and backward prediction components of blockwise organised digital picture data in a page addressed memory, storing the components in separate address areas, each block having an address comprising a block address ($A_{Block}$) and a motion address ($A_{BlockBew}$), assigning the same block addresses ($A_{Block}$) to said different components of each of one block, with said motion address ($A_{BlockBew}$) being proportional to the positions (rv; cv) determined by the displacement vectors, the circuit comprising means for calculating said block address ($A_{Block}$) and means for calculating said motion address ($A_{Block}$), the means for calculating said block address ($A_{Block}$) comprising one adder used for summarising two part addresses of the block address ($A_{Block}$), the first of said part address (e.g. $rb \cdot N \cdot B^2$) being proportional to a corresponding line of the respective block and the second component (e.g. $cb \cdot B$) being proportional to a corresponding column of the respective block, the different components of a picture having the same value of the respective said part addresses (e.g. $rb \cdot N \cdot B^2$; $cb \cdot B$) being proportional to the lines and columns.

9. Circuit as claimed in claim 8, comprising two adder for summing the part addresses, being proportional to the line and column of the frame of the picture, wherein one adder (101) is used for calculating the block address ($A_{Block}$) and the other adder (109) is used for calculating the motion address ($A_{BlockBew}$).

10. Circuit as claimed in claim 9, comprising two adder for calculating the parts of address of the block address, being proportional to the line and column of the frame of the picture, the first adder (102) suitable for multiplication of the block size (B) and a value (cb), being proportional to the position of a respective column of the part of said picture, the second adder (103) suitable for multiplication of the square of the block, size ($B^2$) and a value (e.g. $rb \cdot N$), being proportional to the position of a respective line of the part of said picture.

11. Circuit as claimed in claim 10 for calculating the part addresses of the motion address, comprising an adder (105) for receiving said part address ($cb \cdot B+cv$), being proportional to the column of the frame of the picture, adding a first value (cv), being proportional to the position of a column of the motion address, and said part address of said block address ($cb \cdot B$), being proportional to the column of the frame of the picture, a multiplier (104) for generating the product of a second value (N), being proportional to the number of blocks in a line, and a third value (rv), being proportional to the position of a line of the motion address, a succeeding adder suitable for multiplying said result of the multiplier (104) and the number of blocks (B), and a following adder (106) for adding the result of the preceding adder and the part address of the block address ($rb \cdot N \cdot B^2$) to get the part address ($Ar_{BlockBew}$) of the motion address ($A_{BlockBew}$), being proportional to the line of the frame of the picture.

12. Circuit as claimed in claim 11, comprising means for checking the conformity of said motion address ($A_{BlockBew}$), the means having two adder (107, 108) for adding or subtracting said two parts of address ($Ar_{BlockBew}$; $Ac_{BlockBew}$), one being proportional to the lines and one being proportional to the columns of a respective picture element, and a respective reference value.

13. Circuit as claimed in claim 12, wherein said two adder (107, 108) are half adder.

**14.** Circuit as claimed in claim 12 or 13, comprising means for calculating reference values, the means having two adder suitable for multiplication, the first adder multiplying a value (e.g. N-1), being proportional to the number (N) of blocks of a line, and the block size (B) and the second adder multiplying a value (e.g. (M-1) · N), being proportional to the number of blocks in a line (N) and a column (M), and the square of the block size ($B^2$).

Drawings

Fig. 1

Fig. 2

1. Bild

2. Bild

Fig. 3